# EUROPEAN PATENT APPLICATION

(11) **EP 0 876 747 A1**
(43) Date of publication of application: **11.11.1998**
(21) Application number: 98201412.8
(22) Date of filing: 01.05.1998
(51) Int. Cl.: A01C 15/00, A01C 17/00

(54) **An implement for spreading granular and/or pulverulent material**

(30) Priority: 06.05.1997 NL 1005981
(71) Applicant: MAASLAND N.V., 3155 PD Maasland (NL)
(72) Inventor: Bom, Cornelis Johannes Gerardus, 3181 VC Rozenburg (NL); van der Vlugt, Hendrick Hans, 3155 VK Maasland (NL)
(74) Representative: Mulder, Herman

(57) **Abstract**

An implement for spreading material, comprising a spreading member which is rotatable about an upwardly extending axis, to which spreading member a discharge member for supplying material is connected, which spreading member cooperates at one side with a guide member located at that side where the spreading member rotates rearwards relative to the direction of travel and which guide member is provided with a number of downwardly extending blades for guiding the material in a direction faced away from the side where the guide member is located, while a number of blades which are located in the rearmost portion of the guide member have a shielding plate at least at that portion of their lower edge that faces the axis of rotation, said plate having a rear side extending at least substantially along the rearmost ends of the blades, so that an undesired distribution of the material during its movement along these blades is prevented at least to a significant extent.

## Description

The invention relates to an implement for spreading granular and/or pulverulent material, such as fertilizer, comprising at least one spreading member which is rotatable about an upwardly extending axis of rotation, to which spreading member there is connected a discharge member via which the material to be distributed is supplied to the spreading member, one side of said spreading member being provided with a guide member extending in the direction of travel A of the spreading member, which guide member is located at that side where the spreading member rotates rearwards relative to the direction of travel and which guide member is provided with a number of downwardly extending blades for guiding the material, by means of which blades at least a substantial portion of the material to be distributed is guided in a direction faced away from the side where the guide member is located.

Such an implement is described in Dutch publication 9201689.

It has appeared that the guide member of this implement functions properly under specific conditions, but that under different conditions, e.g. when different kinds of fertilizer are applied, the fertilizer does not fall on the ground in a favourable distribution pattern.

In accordance with the invention, part of the blades which, relative to the direction of travel A of the implement, are located in the rearmost portion of the guide member, at least at that portion of their lower edge that faces the axis of rotation, is provided with a shielding plate, so as to prevent, at least to a significant extent, an undesired distribution of the material during its movement along these blades and whereby, in bottom view, relative to the direction of travel A, the plate has a front side which extends at least substantially along the foremost ends of a number of the blades and which, relative to the direction of travel A, is located at the rearmost portion of the guide member and whereby, in bottom view, relative to the direction of travel A, the plate has a rear side extending at least substantially along the rearmost ends of the blades.

According to a further embodiment of the invention, at the lower side of the guide member in the space behind the first group of blades there is disposed a plate making the flow of material turn off downwards. This plate may prevent material having a very specific granule shape and tending to swirl after coming off from the blades from falling beyond the outermost side of the guide member.

According to a further embodiment of the invention, the guide member is provided with more than ten blades, at least more than half of which extending substantially in a curved manner seen from below.

According to another embodiment of the invention, relative to the direction of travel A the front side of the guide member decreases in height from its outer lateral side towards its lateral side near the axis of rotation. Also this feature may contribute to limit the flow width.

According to a still further embodiment of the invention, a number of blades are provided with a rubber coating at their side along which the material flows. This rubber coating may slow down the speed of the granules when the latter move along the blades and thus influence the spread pattern in a favourable manner.

According to an embodiment of the invention, the guide member is fitted to the implement so as to be pivotable upwards and is provided with a flexible shielding means with the aid of which an opening between the guide member and the implement is closed. In this manner specific kinds of material are prevented from escaping between the hopper and the guide member.

For a better understanding of the invention, reference will now be made to the accompanying drawings, in which:
Figure 1 shows schematically in plan view how the material in the embodiment of the invention is distributed over a surface to be spread;
Figure 2 is a plan view of the implement according to the invention, the hopper not being shown therein;
Figure 3 shows to an enlarged scale a bottom view of the guide member according to the invention;

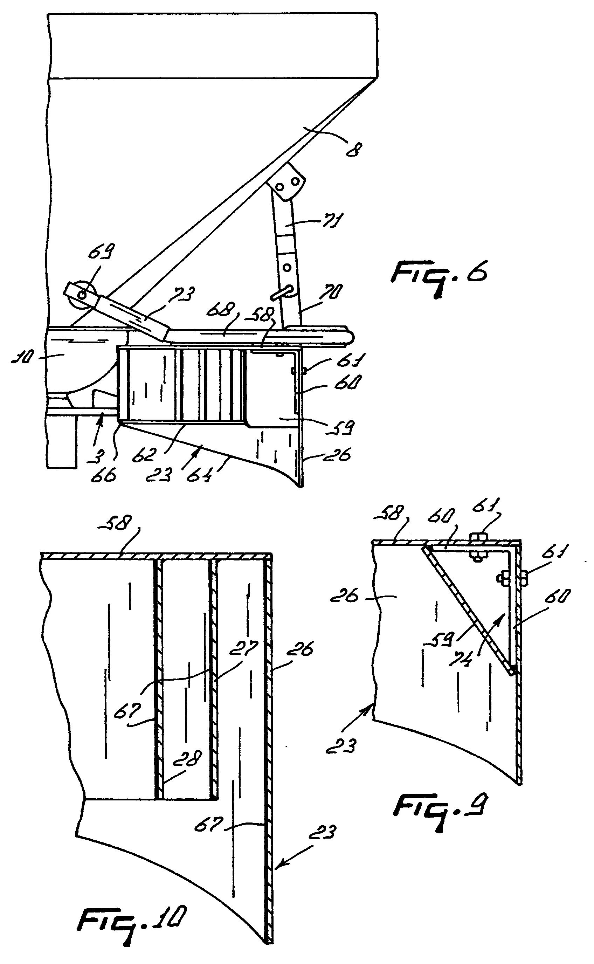

Figure 4 shows to a different scale a side view according to the arrow IV of Figure 2 of the implement according to the invention including a guide member;

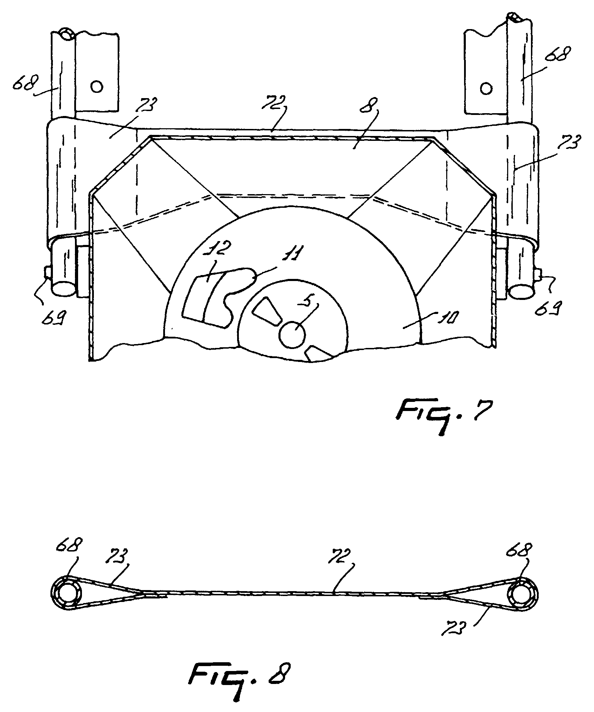

Figure 5 is a partial front view according to the arrow V of Figure 2 of the implement according to the invention including a spreading member;
Figure 6 is a partial rear view according to the arrow VI in Figure 5, in which a plate making a flow of material turn off is disposed behind the blades;
Figure 7 is a partial plan view of the implement according to the invention provided with a flexible shielding means;
Figure 8 is a cross-section taken on the line VIII - VIII of Figure 7 of the flexible shielding means according to the invention;
Figure 9 is to an enlarged scale a side view taken on the line IX - IX in Figure 4, and
Figure 10 is a cross-section of blades taken on the line X - X in Figure 2, which blades are provided with a rubber coating.

The invention relates to an implement for spreading material over a surface, in particular for spreading material, such as fertilizer, over agricultural areas. During moving across the surface to be spread, the implement according to the invention usually distributes the material on both sides of the longitudinal axis of the implement over equal distances. The material can then be distributed over a strip having a width of e.g. approximately 48 metres. According to the invention, however, the implement is provided with a guide member, so that the material is only distributed in a limited manner on one side of the implement. The implement may be constituted by a self-propelled machine or, like in the embodiment shown, an implement that can be coupled to a tractor or similar vehicle.

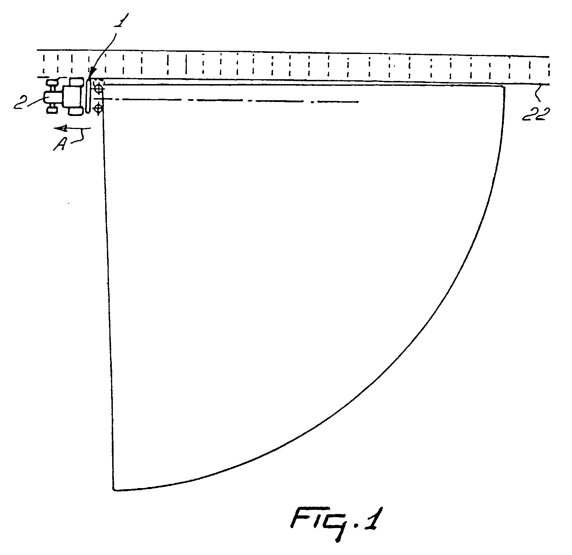

As shown in Figure 1, in this embodiment the implement 1 is capable of being coupled to a tractor 2 for the purpose of being moved during operation across the surface to be spread, which surface is located along the boundary of the area, e.g. a ditch.

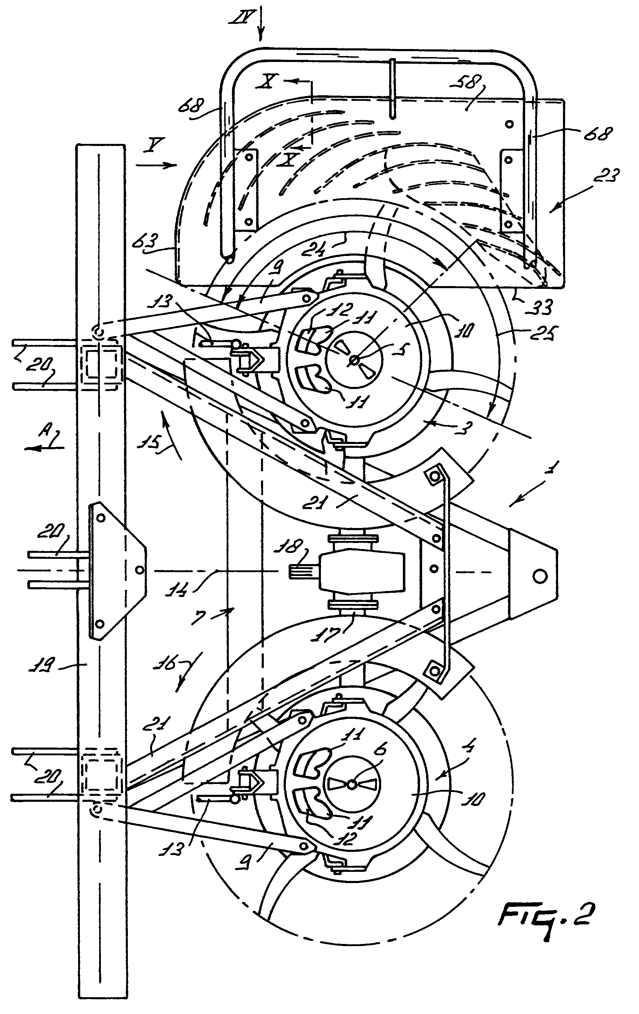

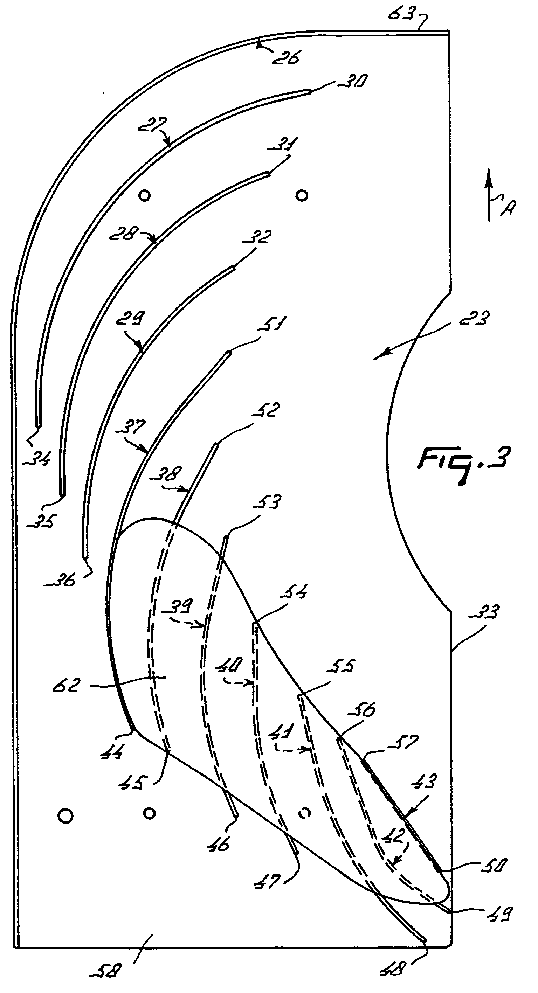

As shown in Figure 2, the implement according to the invention comprises in this embodiment two spreading members 3 and 4 provided with ejector blades, each of which spreading members can be set rotating during operation about an axis of rotation 5, 6 respectively. The spreading members 3 and 4 are located beside each other and on both sides of the longitudinal axis, transversely to the central longitudinal axis of the implement. The implement comprises a frame 7 on which a hopper 8 is disposed. During operation the material to be spread is supplied from the hopper 8 to the spreading members 3 and 4 which, during normal operation, each spread the material at least almost across the entire spreading width and on both sides of the longitudinal axis of the implement over at least almost equal distances. The amount of material which can be supplied per unit of time from the hopper 8 to the spreading members 3 and 4 can be controlled by a metering device 9 disposed between the hopper and each of the spreading members 3 and 4. The metering devices 9 are in principle equal to each other, known per se and therefore not shown separately. The metering devices each comprise a bowl-shaped discharge member 10 which fits to a lower end of a non-shown spout-like discharge opening of the hopper 8. In this embodiment, each of the discharge members has two discharge openings 11 through which the material can be supplied from the hopper to a corresponding spreading member. The discharge openings 11 can optionally be closed to a greater or lesser extent for controlling the amount of material which can be supplied to the spreading members per unit of time. In this embodiment, for that purpose closing members 12 can be moved along the discharge openings 11 and be secured optionally in one of several positions. The closing members are coupled with an adjusting member.

During normal operation the implement is moved along in the direction A, the material being spread on both sides of the central longitudinal plane 14 of the implement. The central longitudinal plane 14 is located halfway between the two spreading members 3 and 4 and parallel to the axes of rotation 5 and 6 extending parallel to each other. The axes 5 and 6 are orientated vertically when the implement and, in these embodiments, consequently the two spreading members, are in a horizontal position. During operation the spreading members 3 and 4 can be driven in the directions of rotation 15, 16 respectively, while the spreading members distribute the material across overlapping distribution sectors. The directions of rotation 15 and 16 are such that the sides of the spreading members 3 and 4 that are facing each other move in a direction opposite to the direction in which the material is mainly distributed. When there is not provided a guide member, each of the spreading members distributes the material on both sides of the central longitudinal plane 14 at least over approximately equal distances. When, in accordance with the invention, there is provided a guide member, also called a side distribution cap, the implement is adapted to move along the edge of a ditch and to distribute the material towards the ditch-side in a limited direction, as shown in Figure 1.

The spreading members 3 and 4 are disposed on a carrier member 17 which is designed in this embodiment as a gear box comprising drive means by which the spreading members can be driven. These drive means comprise an axle 18 which projects beyond the case-like carrier and which can be coupled in a non-shown manner with the power take-off shaft of the tractor 2 by means of an intermediate shaft.

For connecting the implement to the tractor, the frame 7 of the implement has at its front side a substantially vertically extending frame portion 19 which is provided with coupling members 20 that are capable of being coupled to the three-point lifting hitch of a tractor. The frame comprises frame beams 21 supporting the hopper 8 and extending rearwardly relative to the normal direction of travel A.

When the implement for spreading material is used along field edges 22 of e.g. agricultural areas in such a manner that the material is distributed mainly only to one side of the implement, the supply of material to one of the two spreading members is stopped, so that this spreading member no longer distributes material during spreading along the field edge.

In the embodiment shown in the figures, the distribution of the material by means of the spreading member 4 is stopped, which spreading member is located at that side of the central longitudinal plane 14 that is not orientated towards the field edge 22. Only by means of the other spreading member 3 material will be distributed. Near said spreading member 3 there is disposed a protective cap serving as a guide member 23 for the material. This guide member is designed and disposed in such a manner that, during normal operation, the material spread by the spreading member 3 towards that side of the central longitudinal plane 14 where the spreading member 3 itself is located, is collected by the guide member 23. The material collected by the guide member 23 is diverted in such a manner that it is distributed towards that side of the central longitudinal plane 14 where the spreading member 4 is located. The guide member 23 is designed such that at least approximately half of the material distributed by the spreading member 3 is diverted so as to be distributed towards that side of the central longitudinal plane 14 where the spreading member 4 is located. Therefore, the guide member 23 fits to the spreading member 3 over an inscribed angle 24 which approximately equals half of the inscribed angle 25 through which the material leaves the circumference of the spreading member for the purpose of being distributed.

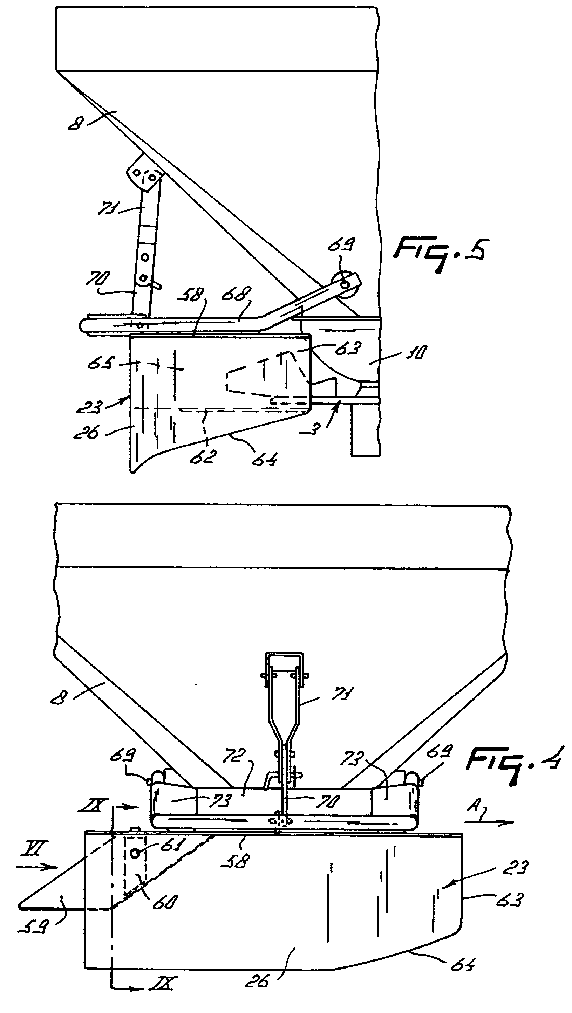

As shown in Figure 3, the guide member 23 is provided at its lower side with two groups of blades. One group of blades 26, 27, 28 and 29 collects first the material distributed by the spreading member.

The blades are disposed in the guide member in such a manner that the distance from the starting points 30, 31 and 32 of the blades 27, 28 and 29, measured from the axis of rotation 5 somewhat decreases, but that the distance from the starting points 30, 31 and 32 to the edge 33 of the spreading member, which edge 33 is located closest to the axis of rotation, increases.

The blade 26, which is the outermost blade, also constitutes the outer edge of the guide member 23.

The blades 27, 28 and 29 have ends 34, 35 and 36 which are positioned such that the material is discharged substantially against the direction of travel A of the implement. The blades 26, 27, 28 and 29 are curved over almost their entire length and have, for manufacturing reasons, at least approximately the same radius of curvature.

The guide member 23 is provided with a second group of blades 37 to 43. The blades 37 to 42 are curved as well, but their rear ends 44 to 49 are bent gradually in such a manner that the material is turned off in a direction faced away from the field edge 22 and makes an angle with the direction of travel A.

The blades 37 to 43 of the second group have starting points 51 to 57 which, like those of the first group of blades 26 to 29, are located on an imaginary curve, while the distance from the starting points to the axis of rotation 5 remains approximately the same, whereas the distance to the edge 33 decreases. Also these blades have a substantially equal curve.

The ends 34, 35 and 36 of the first group of blades 27, 28 and 29 are located, at least substantially, on an oblique line making an acute angle with the outer edge of the guide member constituted by the blade 26.

The ends 44 to 50 of the blades 37 to 43 are also located approximately on an oblique line making an acute angle with the outer edge of the guide member constituted by the blade 26. This second acute angle is greater than the aforementioned acute angle.

Behind the end points 34 to 36 and above the end points 44 to 50 there is provided a free space 58 below the guide member. In this free space there is disposed a plate 59 which is detachably fastened to the guide member 23 by means of side plates 60 and bolts 61.

Seen in side view, the plate 59 projects beyond the guide member 23 and has the form of a parallelogram of which an acute bottom angle is located as rearwardly as possible.

The blades 37 to 43 have at their bottom sides a shielding means constituted by a plate 62. Seen in bottom view, relative to the direction of travel A this plate 62 has a rear side which extends at least substantially along the rear ends 44 to 50 of the blades 37 to 43.

The side of the plate 62 that is most orientated towards the axis of rotation extends along the blade 50, whereas the side of the plate 62 that is most orientated towards the outer lateral side extends along the blade 37.

Viewed in the direction of travel A, the front side of the plate 62 is located in the vicinity of the starting points 53 to 57 of the blades 39 to 43.

The side of the guide member 23 which, relative to the direction of travel A, is the front side 63 has a height 64 which decreases from the outer lateral side of the guide member towards the edge 33.

The front side has a substantially rectangular portion 65 to which fits a portion 66, whose height decreases from its lateral side. In this embodiment, the height of the outer lateral side amounts to approximately twice the height of the blades. Therefore, the front side of the guide member is substantially trapezium-shaped.

With specific kinds of fertilizer it may be advantageous when those lateral sides of the blades along which the material flows are provided with a rubber coating 67. This rubber coating has a slowing down effect on the material. In this case the blades 26, 27 and 28 are provided with a rubber coating 67. It may also be desirable to provide the bottom side of the guide member with a rubber coating.

By means of two arms 68 the guide member 23 is connected with the hopper 8 so as to be pivotable in height about horizontal axes 69. The guide member furthermore comprises a coupling arm consisting of two portions 70 and 71, by means of which the guide member 23 can be secured in a raised position in a manner known per se.

On the arms 68 there is provided a flexible shielding means constituted by a strip 72 of flexible material, such as rubber, which may be sticked or sprayed on the wall.

This strip comprises loops 73 which are disposed around the arms 68. With the aid of this strip 72 which, when the guide member has pivoted downwards, is stretched, splattering material is prevented from escaping along the edge 33 of the guide member.

The function of the implement will be explained in what follows:

The guide member 23 is intended to ensure, especially when material such as fertilizer has to be spread towards the boundary of an area, that spreading along that boundary, which may be a ditch, takes place as accurately as possible.

In this situation the problem is that spreading of fertilizer depends on the granule shape and of course also on the number of revolutions of the spreading member. If these data are changed, the material may fall outside the boundary of the guide member 23. For this guide member 23 a number of measures have been taken which, individually but also collectively, contribute to a solution of the problem.

In the first place, the shape of the blades is such that the material which is thrown outwards upon rotation of the spreading member 3 is collected optimally, is guided along the blades and leaves the blades subsequently in the right direction.

Under specific conditions, i.e. with specific kinds of fertilizer, it may happen that the material, during flowing along the second group of blades, leaves these blades at the bottom side thereof, despite the height of the blades which is considerably greater than the height of the spreading member 3 and which amounts e.g. to 13 cm. As an example of such a kind of fertilizer may be mentioned quicklime/ammonia/saltpetre (called in Dutch KAS). This fertilizer has a specific weight of approximately 1 kg/L and usually a granule size of 2 mm to 4,75 mm for more than 90%.

Therefore, according to the invention, at the bottom side and against the lateral side of a number of blades there is provided a shielding means. This shielding means may be constituted by a substantially horizontal edge for each blade, but according to the present embodiment, there is provided a plate 62 which serves as a shielding means for a number of blades at the same time.

It has furthermore appeared that it may be advantageous to dispose in the free space 58 a plate 59 which turns off the flow of material from the outer blades 26, 27 and 28 inwards and downwards. This plate 59 has such dimensions that the guide member can be cleaned easily.

As shown in Figure 8, the plate is provided with side plates 60 so that there is created a triangular element 74 which can be fastened detachably to the guide member by means of bolts 61. The angle enclosed by the plate 59 with the upper surface of the guide member is greater than 45° and smaller than 65° and amounts in this case to 56°.

However, with specific kinds of material it may be desirable to remove the plate.

The invention is not restricted to the aforementioned embodiment, but also relates to all the details described in the following claims.

## Claims

1. An implement for spreading granular and/or pulverulent material, such as fertilizer, comprising at least one spreading member (3) which is rotatable about an upwardly extending axis of rotation (5), to which spreading member there is connected a discharge member (10) via which the material to be distributed is supplied to the spreading member, one side of said spreading member being provided with a guide member (23) extending in the direction of travel A of the spreading member (3), which guide member is located at that side where the spreading member rotates rearwards relative to the direction of travel and which guide member is provided with a number of downwardly extending blades for guiding the material, by means of which blades at least a substantial portion of the material to be distributed is guided in a direction faced away from the side where the guide member is located, characterized in that at least part of the blades (37 to 43) which, relative to the direction of travel A of the implement, are located in the rearmost portion of the guide member (23), at least at that portion of their lower edge that faces the axis of rotation, is provided with a shielding plate (62), so as to prevent, at least to a significant extent, an undesired distribution of the material during its movement along these blades and whereby, in bottom view, relative to the direction of travel A, the plate (62) has a front side which extends at least substantially along the foremost ends (54 to 57) of a number of the blades.

2. An implement as claimed in claim 1, characterized in that, relative to the direction of travel A, the plate (62) is located at the rearmost portion of the guide member, whereby, in bottom view, relative to the direction of travel A, said plate has a rear side extending at least substantially along the rearmost ends (44 to 47) of the blades.

3. An implement as claimed in any one of the preceding claims, characterized in that the plate (62), at the side which is faced away from the axis of rotation, extends along the blade (37).

4. An implement as claimed in any one of the preceding claims, characterized in that the plate (62) at the side which is faced away from the axis of rotation extends along the blade (37) extending at such a distance from the outer lateral side of the guide member, that through the thus created channel the material passes which has been guided by a number of, e.g. more than three, blades (26 to 29).

5. An implement as claimed in any one of the preceding claims, characterized in that, seen from below, at least more than half of these blades (26 to 29; 37 to 42) extend substantially in a curved manner.

6. An implement as claimed in any one of the preceding claims, characterized in that the guide member is provided with more than ten blades and that, seen from below, at least more than half of these blades extend substantially in a curved manner.

7. An implement for spreading granular and/or pulverulent material, such as fertilizer, comprising at least one spreading member (3) which is rotatable about an upwardly extending axis of rotation (5), to which spreading member there is connected a discharge member (10) via which the material to be distributed is supplied to the spreading member, one side of said spreading member (3) being provided with a guide member (23) extending in the direction of travel A of the spreading member (3), which guide member is located at that side where the spreading member rotates rearwards relative to the direction of travel and which guide member is provided with a number of downwardly extending blades for guiding the material, by means of which blades at least a substantial portion of the material to be distributed is guided in a direction faced away from the side where the guide member is located, characterized in that the guide member is provided with more than ten blades (26 to 29; 37 to 43) and that, seen from below, at least more than half of these blades extend substantially in a curved manner.

8. An implement as claimed in any one of claims 6 or 7, characterized in that the blades which, relative to the direction of rotation (15) of the spreading member (3), are the first blades (26 to 29) which, relative to the direction of travel A, are located in the front portion of the guide member, extend substantially in a curved manner.

9. An implement as claimed in any one of claims 6 to 8, characterized in that the end of the blade (27) whose starting point (30) is furthest removed from the axis of rotation (5), relative to the direction of rotation of the spreading member, is located at the outer lateral side, and that the other blades are located with their starting point successively at a shorter distance from the axis of rotation and, relative to the direction of rotation, are successively further removed from the outer lateral side of the guide member.

10. An implement as claimed in any one of claims 6 to 9, characterized in that the guide member is provided with a second group of blades (37 to 43) a predominant number of which have a shielding plate (62) at their bottom side.

11. An implement as claimed in any one of claims 6 to 10, characterized in that the second group of blades (37 to 43) of the guide member, relative to the direction of rotation of the spreading member, is located more rearwardly.

12. An implement as claimed in any one of claims 6 to 11, characterized in that the starting point (52) of the outermost blade (38) of the second group of blades is located in or near the vicinity of an imaginary plane perpendicular to the ground, which plane extends through the axis of rotation and perpendicular to the normal direction of travel A.

13. An implement as claimed in any one of claims 6 to 12, characterized in that the end point (50) of the last blade of the second group is located near the lateral side of the guide member that is situated closest to the axis of rotation.

14. An implement as claimed in any one of claims 6 to 13, characterized in that at least a number of the starting points (30 to 32), and preferably all the starting points (30 to 32), of the blades of the first group are located on a curved line which extends concavely around the axis of rotation (5).

15. An implement as claimed in any one of claims 6 to 14, characterized in that at least a number of the starting points (52 to 56), and preferably all the starting points (52 to 56), of the second group of blades are also located on a curved line which extends concavely around the axis of rotation (5).

16. An implement as claimed in any one of claims 6 to 15, characterized in that the starting points of the blades of both groups are located on a concave line, in particular almost on a circle, around the axis of rotation.

17. An implement as claimed in any one of claims 6 to 16, characterized in that the rearmost ends (34 to 36) of the first group of blades (27 to 29) are located on a line which extends obliquely relative to the direction of travel, which line makes an acute angle with the outer lateral side of the guide member.

18. An implement as claimed in any one of claims 6 to 17, characterized in that a number of the rearmost ends (44 to 48) of the second group of blades (37 to 41) are located on an oblique line which makes an acute angle with the outer lateral side of the guide member.

19. An implement as claimed in any one of claims 17 or 18, characterized in that the oblique line of the first group of blades encloses a more acute angle with the outer lateral side of the guide member than the oblique line of the second group of blades.

20. An implement as claimed in any one of the preceding claims, characterized in that the front side of the guide member (23), relative to the direction of travel A, has a height (64) which decreases from its outer lateral side (26) towards its lateral side (33) near the axis of rotation.

21. An Implement for spreading granular and/or pulverulent material, such as fertilizer, comprising at least one spreading member (3) which is rotatable about an upwardly extending axis of rotation (5), to which spreading member there is connected a discharge member (10) via which the material to be distributed is supplied to the spreading member, one side of said spreading member being provided with a guide member (23) extending in the direction of travel A of the spreading member (3), which guide member is located at that side where the spreading member rotates rearwards relative to the direction of travel and which guide member is provided with a number of downwardly extending blades for guiding the material, by means of which blades at least a substantial portion of the material to be distributed is guided in a direction faced away from the side where the guide member is located, characterized in that, relative to the direction of travel A, the front side of the guide member (23) has a height (64) which decreases from its outer lateral side (26) towards its side near the axis of rotation.

22. An implement as claimed in any one of claims 20 or 21, characterized in that the front side of the guide member has an at least substantially rectangular wall portion (63) to which fits a portion (64) which decreases in height, which portion achieves its greatest height at the outer lateral side of the guide member.

23. An implement as claimed in any one of the preceding claims, characterized in that the outer lateral side of the guide member serves as a blade (26).

24. An implement as claimed in any one of the preceding claims, characterized in that at the lower side of the guide member in the space (58) behind the first group of blades there is disposed a plate (59) which making the flow of material turn off downwards.

25. An implement for spreading granular and/or pulverulent material, such as fertilizer, comprising at least one spreading member (3) which is rotatable about an upwardly extending axis of rotation (5), to which spreading member (3) there is connected a discharge member (10) via which the material to be distributed is supplied to the spreading member, one side of said spreading member (3) being provided with a guide member (23) extending in the direction of travel A of the spreading member, which guide member is located at that side where the spreading member rotates rearwards relative to the direction of travel and which guide member is provided with a number of downwardly extending blades for guiding the material, by means of which blades at least a substantial portion of the material to be distributed is guided in a direction faced away from the side where the guide member is located, characterized in that the guide member is provided with a first group of blades, which blades turn off rearwards from the front side of the guide member, while there is a space (58) behind the rearmost ends of this group and in the space (58) behind the first group of blades there is provided a plate which turns off the flow of material downwards.

26. An implement as claimed in claim 24 or 25, characterized in that the plate (59) in the space (58) behind the blades, seen from the front side of the guide member, encloses an acute angle with the upper side of the guide member, which angle is preferably greater than 45°.

27. An implement as claimed in any one of claims 24 to 26, characterized in that, seen in rear view, the plate (59) projects beyond the end of the guide member where the material is discharged.

28. An implement as claimed in any one of claims 24 to 27, characterized in that, seen in side view, the plate (59) has at least substantially the shape of a parallelogram.

29. An implement as claimed in any one of claims 24 to 28, characterized in that the plate is detachably fitted to the guide member.

30. An implement as claimed in any one of the preceding claims, characterized in that a number of blades (26 to 28) are provided with a rubber coating (67) at their side along which the material flows.

31. An implement for spreading granular and/or pulverulent material, such as fertilizer, comprising at least one spreading member (3) which is rotatable about an upwardly extending axis of rotation (5), to which spreading member there is connected a discharge member (10) via which the material to be distributed is supplied to the spreading member, one side of said spreading member being provided with a guide member (23) extending in the direction of travel A of the spreading member (3), which guide member is located at that side where the spreading member rotates rearwards relative to the direction of travel and which guide member is provided with a number of downwardly extending blades for guiding the material, by means of which blades at least a substantial portion of the material to be distributed is guided in a direction faced away from the side where the guide member is located, characterized in that a number of blades (26 to 28) are provided with a rubber coating (67) at their side along which the material flows.

32. An implement as claimed in claim 30 or 31, characterized in that at least the two outer blades (26, 27) are provided with a rubber coating.

33. An implement as claimed in any one of the preceding claims, characterized in that the guide member (23) is fitted to the implement so as to be pivotable upwards and is provided with a flexible shielding means (72) with the aid of which an opening between the guide member (23) and the implement (1) is closed.

34. An implement for spreading granular and/or pulverulent material, such as fertilizer, comprising at least one spreading member (3) which is rotatable about an upwardly extending axis of rotation (5), to which spreading member there is connected a discharge member (10) via which the material to be distributed is supplied to the spreading member (3), one side of said spreading member being provided with a guide member (23) extending in the direction of travel A of the spreading member, which guide member is located at that side where the spreading member rotates rearwards relative to the direction of travel and which guide member is provided with a number of downwardly extending blades for guiding the material, by means of which blades at least a substantial portion of the material to be distributed is guided in a direction faced away from the side where the guide member is located, characterized in that the guide member (23) is fitted to the implement so as to be pivotable upwards and is provided with a flexible shielding means (72) with the aid of which an opening between the guide member and the implement is closed.

35. An implement as claimed in any one of claims 33 or 34, characterized in that the flexible shielding means (72) is constituted by a strip of flexible material.

36. An implement as claimed in any one of claims 33 to 35, in which the guide member is pivotably fitted to the implement by means of two arms (68), characterized in that the flexible shielding means is disposed on the two arms (68), preferably by means of loops (73).
